# EUROPEAN PATENT APPLICATION

(11) **EP 3 046 363 A1**
(43) Date of publication of application: **20.07.2016**
(21) Application number: 15305050.5
(22) Date of filing: 16.01.2015
(51) Int. Cl.: H04W 28/10, H04W 36/22, H04L 12/707, H04W 76/02, H04L 12/46

(54) **WLAN offload from an evolved packet core network**

(71) Applicant: ALCATEL LUCENT, 92100 Boulogne-Billancourt (FR)
(72) Inventor: Thiebaut, Laurent, 91620 Nozay (FR); Brayley, Jeremy, Pittsburgh, PA Pennsylvania 15229 (US); Muley, Praveen, Mountain View, CA California 94043-4025 (US); Henderickx, Wim, 2018 Antwerp (BE); Van de Velde, Thierry, 2018 Antwerp (BE)
(74) Representative: El Manouni, Josiane

(57) **Abstract**

In an embodiment, there is provided a User Equipment UE configured to:
- support access, via an untrusted WLAN access, to an evolved Packet Data Gateway ePDG of an Evolved Packet Core EPC network, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

## Description

The present invention generally relates to mobile communication networks and systems.

Detailed descriptions of mobile communication networks and systems can be found in the literature, such as in particular in Technical Specifications published by standardization bodies such as for example 3GPP (3^{rd} Generation Partnership Project).

In general, in a packet mobile communication system, an User Equipment (UE) has access to an external IP network (also called Packet Data Network PDN, such as Internet, Intranet, or Operator's IP network e.g. IMS) via a mobile network providing mobile communication services, including IP connectivity services. A mobile network generally comprises a Core Network accessed by an Access Network.

An example of packet mobile communication system is Evolved Packet System (EPS). An EPS network comprises a Core Network (called Evolved Packet Core (EPC)), which can be accessed by 3GPP Access (such as E-UTRAN), as well as by Non-3GPP IP Access (such as WLAN).

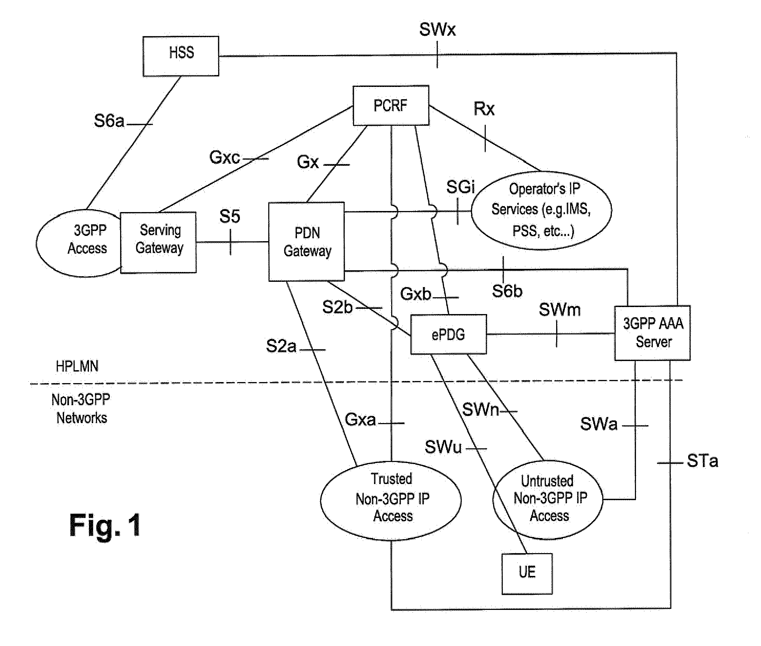

Non-3GPP IP Access access to EPC is specified in particular in 3GPP TS 23.402. A distinction between trusted and Non-Trusted Non-3GPP IP Access has been introduced in particular in 3GPP TS 23.402 and 3GPP TS 33.402. A Trusted Non-3GPP IP Access interfaces with a PDN Gateway PGW in EPC directly via an interface called S2a interface. A Non-Trusted Non-3GPP IP Access interfaces with a PDN Gateway PGW in EPC via an evolved Packet Data Gateway ePDG. The interface between UE and Non-Trusted Non-3GPP IP Access is called SWu interface, and the interface between ePDG and PDN Gateway is called S2b interface. An example of architecture for Non-3GPP IP Access to EPC (including both Trusted and Untrusted Non-3GPP IP Access) is recalled in figure 1 taken from 3GPP TS 23.402.

In the following, the case of a Non-3GPP IP Access corresponding to WLAN Access will more particularly be considered.

Non-seamless WLAN offload, NSWO, is defined in particular in 3GPP TS 23.402. A UE supporting NSWO may, while connected to WLAN access, route specific IP flows via the WLAN access without traversing the EPC. NSWO is therefore beneficial for the user (as it allows cheaper access to an external IP network, typically the Internet) and for the operator (as it offloads such IP traffic, typically to the Internet, from the EPC).

However, as recognized by the inventors and as will be described with more detail later, the use of NSWO functionality is currently limited, due in particular to the fact that security is not provided with NSWO as currently defined, in case of Non-Trusted WLAN Access. There is a need to allow for a broader use of the NSWO functionality in such networks and systems, in particular there is a need to provide security for NSWO in case of Non-Trusted WLAN Access.

Embodiments of the present invention in particular address such needs.

These and other objects are achieved, in one aspect, by a User Equipment UE, configured to:
- support access, via an untrusted WLAN access, to an evolved Packet Data Gateway ePDG of an Evolved Packet Core EPC network, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

These and other objects are achieved, in another aspect, by an evolved Packet Data Gateway ePDG for an Evolved Packet Core EPC network, said ePDG configured to:
- support access of an User Equipment UE, via an untrusted WLAN access, to said ePDG, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

These and other objects are achieved, in other aspects, by method(s) comprising one or more step(s) performed by such entity(ies).

Some embodiments of apparatus and/or methods in accordance with embodiments of the present invention are now described, by way of example only, and with reference to the accompanying drawings, in which:
- Figure 1 is intended to recall an example of architecture for Non-3GPP IP Access to EPC,

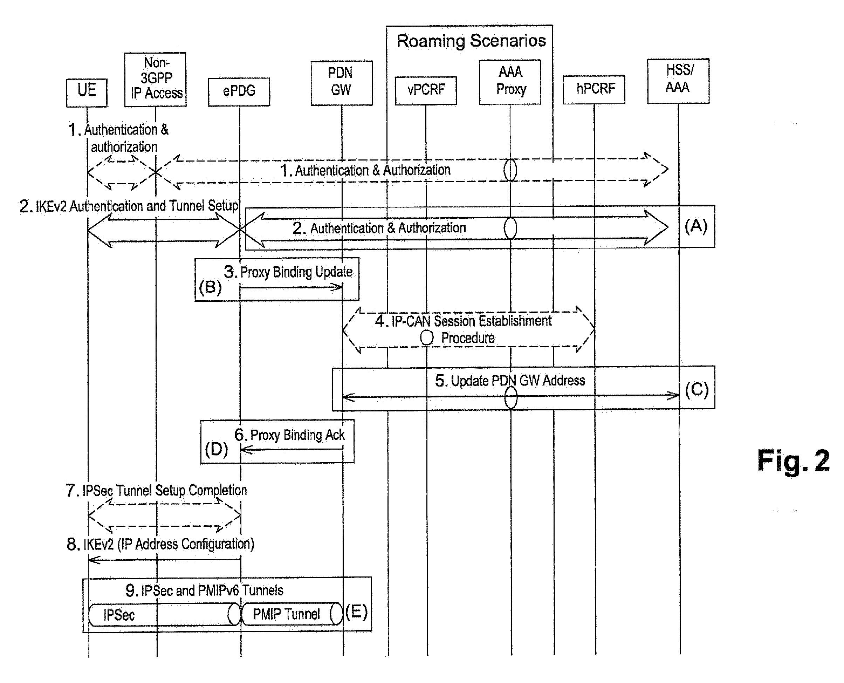

- Figure 2 is intended to recall a procedure for Initial Attach over S2b interface, e.g. PMIP-based S2b interface,
- Figure 3 is intended to illustrate an example of Initial Attach procedure for Secured NSWO, according to embodiments of the invention.

3GPP has defined (in 3GPP TS 23.402) a NSWO (Non Seamless WLAN Offload) service where, for an UE (User Equipment) connected over WLAN, the traffic of the UE is not forwarded via a PGW/GGSN but is forwarded as soon as possible towards the "Internet". This provides a cheap access to Internet.

This kind of service is well suited for the case where the UE is connected to a Trusted AP (Access Point), e.g. when the AP is operated by the operator with which the end-user has a subscription or by one of his partners (be this partner another 3GPP operator or not). In this case it can be expected that the security provided by the AP prevents another malicious user from eavesdropping the traffic of the user or from injecting malicious traffic towards or instead of the terminal (UE) of the user

When the UE is connected to a non trusted AP, there is the risk that the AP does not provide sufficient security.

In case of WLAN access on a non trusted AP, 3GPP has defined (§7 of 3GPP TS 23.402) a secured tunnel (reference point called SWu) between the UE and a 3GPP EPC entity called ePDG (the secured tunnel is based on IETF IKE (IETF RFC 5996) and IPSec (IETF RFC 5996)). The IPSec/IKE based access to the ePDG provides security against eavesdropping, traffic tampering and injection.

An issue is that current 3GPP specifications, only foresee the access to a PGW/GGSN over an SWu tunnel to the ePDG: all traffic received by the ePDG shall with current 3GPP specifications be sent to a PGW.

In an embodiment, an intermediate service is introduced between the baseline NSWO (relying on the security from the AP, which in case of an Open SSID may be inexistent) and the access over SWu to a PGW (providing security and, at mobility between 3GPP and WLAN access, IP address preservation).

In an embodiment, this service called secured NSWO allows the UE to access to an ePDG for the purpose of NSWO: thus traffic exchanged over the (secured) SWu tunnel is not forwarded to a PGW but is immediately forwarded by the ePDG towards the Internet.

In an embodiment, the UE requests a secured NSWO service from the network by providing a well-known APN (name to be defined e.g. by GSMA) that is interpreted by the ePDG as requiring no access to a PGW.

Requiring the UE to set-up the IKE tunnel without providing an APN would not work (to request a secured NSWO service), as it is understood by the network as requiring a PDN connection to the default APN.

In an embodiment, the procedure for the UE to set-up an SWu tunnel to the ePDG for the sake of a secured NSWO service is the same than the procedure defined to set-up a SWu tunnel to access to a PGW over S2b with one or more of following exceptions:
- The UE does not request connectivity over SWu by providing in the IDr payload of the UE IKEV2 request a regular APN but indicates a request for secured NSWO by providing a well-known APN (name, e.g. "secured_NSWO" to be defined e.g. by GSMA).
- As part of the Authorization information sent to the ePDG, the AAA server may provide the ePDG with subscription information on other (regular) APN(s) (containing possibly references to PDN GW(s) serving the UE on these APN(s)) as well as with subscription information on the secured NSWO service ( APN information without any PGW information). As currently defined, the ePDG stores the subscription information received from the AAA for use in case the UE would later request another SWu tunnel. There is no specific constraint on whether the request for secured NSWO corresponds to the first SWu tunnel set-up by an UE.
- The UE shall indicate the type of address(es) (IPv4 address or IPv6 prefix /address or both) in the CFG_Request sent to the ePDG during IKEv2 message exchange but when the UE requests a secured NSWO service the UE should not provide a requested IP address in the CFG_Request (as secured NSWO does not support IP address preservation) (or if the UE provides one IP address, this IP address is ignored by the ePDG).
- When the ePDG has received from the AAA server an indication of the success of the authentication of the UE and the UE has requested a secured NSWO service, the ePDG does not try to contact a PGW (does not set-up a S2b link) to allocate the IP address (and/or IPv6 Prefix) for the secured NSWO service and stores the mapping between this IP address (and/or IPv6 Prefix) for the secured NSWO service and the SWu tunnel with the UE. The IP address (and/or IPv6 Prefix) for the secured NSWO service is used as the inner IP address of the IPSec tunnel(s) over SWu.

### Secured Non-seamless WLAN offload

Embodiments of the invention introduce a Secured Non-Seamless WLAN Offload service, which may be presented in one or more of the following ways.

Secured Non-seamless WLAN offload (NSWO) is an optional capability of a UE.

A UE supporting secured non-seamless WLAN offload (secured NSWO) may, while connected to an Untrusted WLAN access, set-up a secured SWu tunnel with an ePDG and request that IP flows exchanged via this secured SWu tunnel are subject to normal IP-based routing without being handled by a PGW.

On the UE, the IP flows subject to a Secured Non-seamless WLAN offload service are identified by the same mechanisms than the IP flows subject to a Non-seamless WLAN offload (refer to sub-clause 4.1.5 of 3GPP TS 23.402). The UE may use local policies to decide on whether NSWO (per sub-clause 4.1.5) or secured NSWO (per this clause) applies. For example, the UE may decide to use (request) secured NSWO when the AP does not advertise support of HS2.0 (as when HS 2.0 is supported on a WLAN connection the security is assumed to be sufficient). As another example the UE may decide to use secured NSWO (instead of "regular" NSWO) as soon as it is told by the AAA server that the access is to be considered as "Untrusted" (using the AT_TRUST_IND indication in EAP signaling sent to the UE)

For performing the secured non-seamless WLAN offload, the UE needs to acquire a local IP address (and/or IPv6 Prefix) on the WLAN access, and then to connect to an ePDG indicating a request for secured NSWO. In this case the ePDG allocates the IP address (and/or IPv6 Prefix) for the secured NSWO service at the establishment of the IKE SA with the UE. The IP address (and/or IPv6 Prefix) for the secured NSWO service is used as the inner IP address of the IPSec tunnel(s) over SWu.

It is possible for a UE which also supports seamless WLAN offload (access to a PGW over an SWu link to an ePDG) to perform seamless WLAN offload (access to a PGW ) for some IP flows and secured non seamless WLAN offload for some other IP flows simultaneously.

### ePDG

Embodiments of the invention introduce new ePDG functionalities. In some embodiments, changes in ePDG functionalities introduced by embodiments of the invention include the following:
- (when a secured NSWO service applies): traffic exchanged over the (secured) SWu tunnel is not forwarded to a PGW but is immediately forwarded by the ePDG towards the PDN. In this case the ePDG (and not a PGW) allocates the inner IP address of the SWu tunnel i.e. the IP address (and/or IPv6 Prefix) for the secured NSWO service at the establishment of the IKE SA (Security Association) with the UE.
- Routing of downlink packets towards the SWu instance
   - associated with the IP address (and/or IPv6 Prefix) for the secured NSWO service of the UE.

### IP Address Allocation in Untrusted Non-3GPP IP Access using PMIPv6 or GTP on S2b or using a secured NSWO service.

Embodiments of the invention introduce new IP address allocation in Untrusted Non-3GPP IP Access using a Secured NSWO service.

When an Untrusted Non-3GPP IP access is used two types of IP address are allocated to the UE:
- An IP address ("local" IP address), which is used by the UE within the Untrusted Non-3GPP IP Access Network to get IP connectivity towards the ePDG.
- One or more IP address(es), which is used by the UE towards the external PDNs
- via the allocated PDN GW(s) in case the IP connectivity is for EPC-routed traffic
- to directly access to the PDN (without anchoring the traffic to a PGW) in case of a secured NSWO service.

The IP address that is allocated by the Untrusted Non-3GPP IP Access Network is used as the outer IP address of the IPSec SAs between the UE and the ePDG. The allocation of this IP address is out of the scope of this specification.

The IP address (and/or IPv6 Prefix) used towards the external PDN may correspond to an IP address (and/or IPv6 Prefix) that are allocated by the PDN GW(s) in case the IP connectivity is for EPC-routed traffic or to an IP address (and/or IPv6 Prefix) that are locally allocated by the ePDG in case the IP connectivity is for secured NSWO.

### Initial Attach for Secured NSWO

Embodiments of the invention introduce a new procedure for Initial Attach for Secured NSWO.

This clause is related to the case when the UE powers-on in an untrusted non-3GPP IP access network and requires a secured NSWO service.

In this case the authentication takes place as in case Initial attachment over PMIP or GTP based S2b (for roaming, non-roaming and LBO) as described in sub-clauses 7.2 and 7.4 but is not followed by the set-up of a S2b connection to a PGW. Instead the ePDG allocates an IP address (and/or IPv6 Prefix) to the UE at the establishment of the IKE SA with the UE . No PGW is involved to provide connectivity service for the UE.
NOTE 1: Before the UE initiates the setup of an IPsec tunnel with the ePDG it acquies a "local" IP address from an untrusted non-3GPP IP access network. This address is used for sending all IKEv2 [9] messages and as the source address on the outer header of the IPsec tunnel.

The UE may be authenticated and authorised to access the Untrusted Non-3GPP Access network with an access network specific procedure. These procedures are outside the scope of 3GPP.

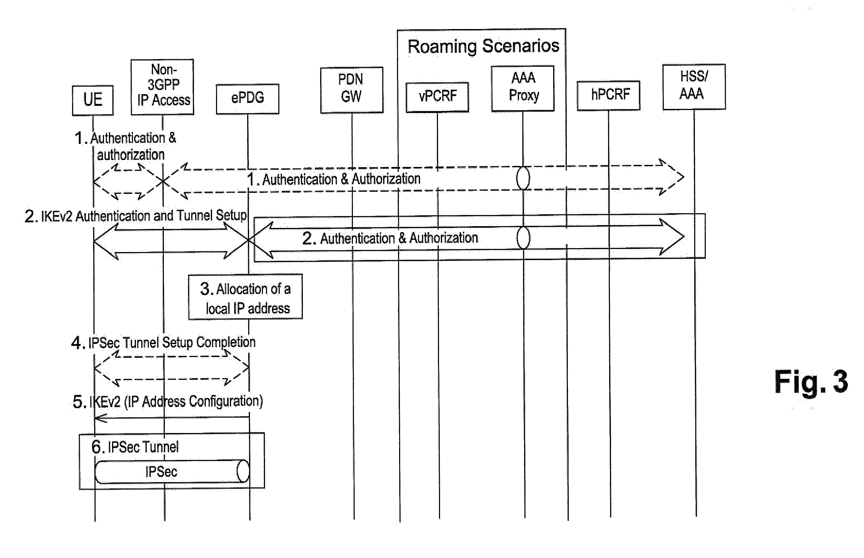

In some embodiments, following steps may be provided, as illustrated in figure 3
1) The (WLAN) Access authentication procedure between UE and the 3GPP EPC may be performed as defined by TS 33.402 [45] and as described for step1 of Figure 7.2.1-1.
2) The IKEv2 tunnel establishment procedure is started by the UE. This step takes place as described in step1 of Figure 7.2.1-1 with following exceptions:
   - The UE does not request connectivity to a specific PDN providing an APN but indicates a request for secured NSWO.
      NOTE 2: The way for the UE to indicates a request for secured NSWO is defined in stage 3. It may correspond to a specific value put in the IDr payload of the UE request (e.g. "secured_NSWO")..
   - The AAA server may provide the ePDG with APN (and PDN GW) information as part of the reply from to the ePDG as described in clause 4.5.1. In this case the ePDG stores that information for use in case the UE would later request another SWu tunnel targetting a subscribed APN.
   - The UE shall indicate the type of address(es) (IPv4 address or IPv6 prefix /address or both) in the CFG_Request sent to the ePDG during IKEv2 message exchange but the UE should not request an IP address in the CFG_Request.
   - No additional authentication and authorisation with an external AAA Server is supported.
3) When the ePDG has received from the AAA server an indication of the success of the authentication of the UE, the ePDG allocates the IP address (and/or IPv6 Prefix) for the secured NSWO service and stores the mapping between this IP address (and/or IPv6 Prefix) for the secured NSWO service and the SWu tunnel with the UE
4) The ePDG indicates to the UE that the authentication and authorization with the external AAA server is successful.
5) The ePDG and the UE finalize the set-up of the IKE SA. As part of this step, the ePDG sends the final IKEv2 message with the IP address (and/or IPv6 Prefix) for the secured NSWO service allocated to the UE within IKEv2 Configuration payloads.
6) IP connectivity from the UE to the PDN GW is now setup. Any packet in the uplink direction is tunnelled to the ePDG by the UE using the IPSec tunnel. The ePDG terminates the IPSec tunnel and then normal IP-based routing takes place. In the downlink direction, packets for UE arrive at the ePDG (without any S2b tunnelling). The ePDG tunnels the packet to the UE via the proper IPsec tunnel on SWu.

In one aspect, there is provided a a User Equipment UE.

Various embodiments are provided, which may be taken alone or in combination, according to various combinations, including (though not limited to) following embodiments.

In an embodiment, said UE is configured to:
- support access, via an untrusted WLAN access, to an evolved Packet Data Gateway ePDG of an Evolved Packet Core EPC network, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

In an embodiment, said UE is configured to:
- indicate a request for said Secured NSWO service.

In an embodiment, said UE is configured to:
- indicate a request for said Secured NSWO service to said ePDG at establishment of an Internet Key Exchange Security Association IKE SA with said ePDG.

In an embodiment, said UE is configured to:
- indicate a request for said Secured NSWO service, by providing a well-known Access Point Name APN that is interpreted by the ePDG as requiring no access to a PDN Gateway in said EPC network.

In an embodiment, said UE is configured to:
- indicate a type of at least one IP address in a request sent to the ePDG during Internet Key Exchange version 2 IKEv2 message exchange, but not requesting an IP address in said request.

In an embodiment, said UE is configured to:
- use local policies to decide whether NSWO, or Secured NSWO, applies.

In another aspect, there is provided an evolved Packet Data Gateway ePDG.

Various embodiments are provided, which may be taken alone or in combination, according to various combinations, including (though not limited to) following embodiments.

In an embodiment, said ePDG is configured to:
- support access of an User Equipment UE, via an untrusted WLAN access, to said ePDG, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

In an embodiment, said ePDG is configured to:
- locally allocate at least one IP address (and/or IPv6 Prefix), referred to as IP address (and/or IPv6 Prefix) for the secured NSWO service, to said UE for said Secured NSWO service.

In an embodiment, said ePDG is configured to:
- store a mapping between a IP address (and/or IPv6 Prefix) for the secured NSWO service allocated to said UE for said Secured NSWO service, and a SWu tunnel between the UE and the ePDG.

In an embodiment, said ePDG is configured to:
- locally allocate at least one IP address (and/or IPv6 Prefix), referred to as the IP address (and/or IPv6 Prefix) for the secured NSWO service, to said UE, upon reception from a AAA Server of an indication of the success of the authentication of the UE, if the UE has indicated a request for said Secured NSWO service.

In an embodiment, said ePDG is configured to:
- locally allocate to said UE at least one IP address (and/or IPv6 Prefix), referred to as the IP address (and/or IPv6 Prefix) for the secured NSWO service, at establishment of an Internet Key Exchange Security Association IKE SA with the UE.

In an embodiment, said ePDG is configured to:
- use normal IP-based routing for forwarding of an uplink packet related to said IP traffic, received through an SWu tunnel mapped to a IP address (and/or IPv6 Prefix) for the secured NSWO service allocated to said UE.

In an embodiment, said ePDG is configured to:
- tunnel through a SWu tunnel mapped to an IP address (and/or IPv6 Prefix) for the secured NSWO service allocated to said UE, a downlink packet related to said IP address (and/or IPv6 Prefix) for the secured NSWO service, received at said ePDG.

Other aspects relate to related method(s) comprising one or more step(s) performed by such entity(ies).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A User Equipment UE configured to:
- support access, via an untrusted WLAN access, to an evolved Packet Data Gateway ePDG of an Evolved Packet Core EPC network, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

2. A User Equipment UE according to claim 1, configured to:
- indicate a request for said Secured NSWO service.

3. A User Equipment UE according to claim 1 or 2, configured to:
- indicate a request for said Secured NSWO service to said ePDG at establishment of an Internet Key Exchange Security Association IKE SA with said ePDG.

4. A User Equipment UE according to any of claims 1 to 3, configured to:
- indicate a request for said Secured NSWO service, by providing a well-known Access Point Name APN that is interpreted by the ePDG as requiring no access to a PDN Gateway in said EPC network.

5. A User Equipment UE according to any of claims 1 to 4, configured to:
- indicate a type of at least one IP address in a request sent to the ePDG during Internet Key Exchange version 2 IKEv2 message exchange, but not requesting an IP address in said request.

6. A User Equipment UE according to any of claims 1 to 5, configured to:
- use local policies to decide whether NSWO, or Secured NSWO, applies.

7. An evolved Packet Data Gateway ePDG for an Evolved Packet Core EPC network, configured to:
- support access of an User Equipment UE, via an untrusted WLAN access, to said ePDG, for an IP connectivity service referred to as Secured Non Seamless WLAN Offload, Secured NSWO, whereby IP traffic between said UE and an external IP network is tunnelled through a secure SWu tunnel between said UE and said ePDG, and said external IP network is directly accessed via said ePDG.

8. An ePDG according to claim 7, configured to:
- locally allocate at least one IP address (and/or IPv6 Prefix), referred to as the IP address (and/or IPv6 Prefix) for the secured NSWO service, to said UE for said Secured NSWO service.

9. An ePDG according to claim 7 or 8, configured to:
- store a mapping between the IP address (and/or IPv6 Prefix) for the secured NSWO service allocated to said UE for said Secured NSWO service, and a SWu tunnel between the UE and the ePDG.

10. An ePDG according to any of claims 7 to 9, configured to:
- locally allocate at least one IP address (and/or IPv6 Prefix), referred to as the IP address (and/or IPv6 Prefix) for the secured NSWO service, to said UE, upon reception from a AAA Server of an indication of the success of the authentication of the UE, if the UE has indicated a request for said Secured NSWO service.

11. An ePDG according to any of claims 7 to 10, configured to:
- locally allocate to said UE at least one IP address (and/or IPv6 Prefix), referred to as the IP address (and/or IPv6 Prefix) for the secured NSWO service, at establishment of an Internet Key Exchange Security Association IKE SA with the UE.

12. An ePDG according to any of claims 7 to 11, configured to:
- use normal IP-based routing for forwarding of an uplink packet related to said IP traffic, received through an SWu tunnel mapped to anIP address (and/or IPv6 Prefix) for the secured NSWO service allocated to said UE.

13. An ePDG according to any of claims 7 to 12, configured to:
- tunnel through a SWu tunnel mapped to an IP address (and/or IPv6 Prefix) for the secured NSWO service allocated to said UE, a downlink packet related to said IP address (and/or IPv6 Prefix) for the secured NSWO service, received at said ePDG.

14. A method for Non Seamless WLAN Offload from an Evolved Packet Core EPC network, comprising at least one step performed by a User Equipment UE according to any of claims 1 to 6.

15. A method for Non Seamless WLAN Offload from an Evolved Packet Core EPC network, comprising at least one step performed by an evolved Packet Data Gateway ePDG according to any of claims 7 to 13.
